# EUROPÄISCHE PATENTSCHRIFT

(11) **EP 2 396 983 B1**
(45) Veröffentlichungstag und Bekanntmachung des Hinweises auf die Patenterteilung: **24.06.2015**
(21) Anmeldenummer: 09804190.8
(22) Anmeldetag: 15.12.2009
(51) Int. Cl.: H04W 12/06, H04L 29/06, H04B 7/04

(54) **Verfahren und System zum sicheren Übertragen einer Nachricht**
Method and system for securely transferring a message
Procédé et système pour une transmission fiable d'un message

(30) Priorität: 11.02.2009 DE 102009008535
(43) Veröffentlichungstag der Anmeldung: 21.12.2011
(73) Patentinhaber: Siemens Aktiengesellschaft, 80333 München (DE)
(72) Erfinder: FALK, Rainer, 85435 Erding (DE); HOF, Hans-Joachim, 85057 Ingolstadt (DE)
(86) Internationale Anmeldenummer: PCT/EP2009/067148
(87) Internationale Veröffentlichungsnummer: WO 2010/091760

(56) Entgegenhaltungen:
- WO-A2-2005/067538
- YU P L ET AL: "Physical-Layer Authentication" IEEE TRANSACTIONS ON INFORMATION FORENSICS AND SECURITY, IEEE, PISCATAWAY, NJ, US, Bd. 2, Nr. 1, 1. März 2008 (2008-03-01), Seiten 38-51, XP011204158 ISSN: 1556-6013

## Beschreibung

Die Erfindung betrifft ein Verfahren und ein System zum sicheren Übertragen einer Nachricht von einer Sendeeinheit zu einer Empfangseinheit, insbesondere einer Empfangseinheit, die Nachrichten über ein Empfangs-Antennen-Array empfängt.

Die Verwendung von MIMO (Multiple Input Multiple Output) bezeichnet im Bereich der drahtlosen Kommunikation die Verwendung mehrerer Antennen beziehungsweise Sendekonten zum Senden und die Verwendung mehrerer Antennen beziehungsweise Empfangsknoten zum Empfangen von Daten. Diese Antennen beziehungsweise Konten bilden dabei jeweils ein Antennen-Array. Das Antennen-Array auf Seiten des Senders wird Sende-Antennen-Array und das Antennen-Array auf Seiten des Empfängers wird Empfänger-Antennen-Array genannt. Diese Art der Signalübertragung wird in einem drahtlosen Kommunikationssystem eingesetzt, um Mehrwegeausbreitung auszunutzen und so den Einfluss von Signalfading zu beschränken. Von kooperativen MIMO spricht man, wenn mehrere selbstständige Instanzen beziehungsweise Knoten ein Antennen-Array zum Senden beziehungsweise Empfangen von Daten beziehungsweise Nachrichten bilden. Bei kooperativem MIMO wird im Gegensatz zu Antennen-Arrays, die in einer einzigen Instanz verbaut sind, jede Antenne durch einen selbstständigen Konten gebildet, beispielsweise einen Sensorknoten.

Bei kooperativem MIMO senden mehrere Instanzen beziehungsweise Sendeknoten, die von einer Sendeeinheit eine Nachricht erhalten haben, diese Daten an ein Empfangsantennen-Array aus. Dieses Empfangs-Antennen-Array enthält ebenfalls mehrere Knoten die die übertragenen Daten empfangen und diese an eine Empfangseinheit liefern, welche daraus die ursprünglich gesendete Nachricht rekonstruiert.

Bei kooperativem MIMO-Verfahren können verschiedene Techniken eingesetzt werden, um Daten von dem Sende-Antennen-Array zu dem Empfangs-Antennen-Array mit geringer Fehlerrate zu übertragen.

Es ist möglich, dass die Instanzen beziehungsweise Sendeknoten des Sende-Antennen-Arrays dieselben Daten aussenden. Die Empfangsknoten des Empfangs-Antennen-Arrays konstruieren jeweils, soweit möglich, aus den empfangenen Daten die ursprünglich verwendeten Daten beziehungsweise versuchen diese wieder herzustellen, beispielsweise mittels eines Rake-Filters. Diese rekonstruierten Daten übermitteln die Empfangsknoten des Empfangs-Antennen-Arrays an die eigentliche Empfangseinheit, welche beispielsweise durch Mehrheitsentscheidung die ursprüngliche Nachricht rekonstruiert. Man kann diese Vorgehensweise auch als ein mehrfach ausgeübtes MISO-(Multiple Input Single Output) Verfahren bezeichnen.

Alternativ können die Sendeknoten beziehungsweise Instanzen des Sende-Antennen-Arrays jeweils verschiedene Daten aussenden, wobei diese Daten das Ergebnis einer speziellen Codierung der Ausgangsdaten beziehungsweise der ursprünglichen Nachricht sind, die von der Sendeeinheit stammen. Die durch die Instanzen beziehungsweise Empfangsknoten des Empfangs-Antennen-Arrays empfangenen Daten stellen eine Mischung der übertragenen Daten dar. Diese Daten werden von den Empfangsknoten des Empfangs-Antennen-Arrays an die Empfangseinheit weitergeleitet, die dann aus den empfangenen Daten aller Empfangsknoten die ursprüngliche Nachricht rekonstruiert. Bei dieser Vorgehensweise können die einzelnen Instanzen beziehungsweise Empfangsknoten des Empfangs-Antennen-Arrays keine Rekonstruktion der ursprünglich gesendeten Daten vornehmen.

Eine weitere bekannte Übertragungstechnik ist das sogenannte MISO-Verfahren. Bei MISO (Multiple Input Single Output) werden wie bei dem oben beschrieben MIMO-Verfahren mehrere Antennen zum Senden einer Nachricht verwendet. Bei MISO wird allerdings lediglich eine Antenne zum Empfangen eingesetzt.

Bei herkömmlichen, kooperativen MIMO-Übertragungsverfahren übersenden die Instanzen beziehungsweise Sendeknoten des Sende-Antennen-Arrays Daten, ohne vorab zu überprüfen, ob diese Daten von einer berechtigten Sendeeinheit stammen. Auch die Instanzen beziehungsweise Empfangsknoten des Empfangs-Antennen-Arrays leiten die empfangenen Daten ungeprüft an die angegebene Empfangseinheit der Nachricht weiter. Es wird somit weder empfangsseitig noch senderseitig eine Authentifizierung des Absenders der Daten vorgenommen. Es müssen daher bei dieser herkömmlichen Vorgehensweise die erhaltenen Daten verarbeitet werden, um die ursprünglich versendete Nachricht zu rekonstruieren und anschließend auf Basis der rekonstruierten Nachricht den Absender der Nachricht zu authentifizieren. Es wird somit erst dann der Absender der Nachricht authentifiziert, nachdem die Nachricht auf der Seite des Empfängers rekonstruiert worden ist.

Angreifer können diese Vorgehensweise ausnutzen um Datenpakete beziehungsweise Nachrichten unbemerkt einzuschleusen. Darüber hinaus ist es Angreifern möglich, die Zwischenknoten beziehungsweise Empfangsknoten sowie die Empfangseinheit unnötig zu belasten, beispielsweise den Rechenaufwand empfangsseitig zu erhöhen. Diese unerwünschte Belastung von Seiten des Empfängers kann zu einer ungewollten Ausnutzung von Kommunikationsresourcen aus Seiten des Empfängers führen, beispielsweise zu einem erhöhten Stromverbrauch der beteiligten Knoten. Insbesondere bei batteriebetriebenen Knoten, beispielsweise Empfangsknoten des Empfangs-Antennen-Arrays kann hierdurch die Betriebsdauer durch einen Angreifer reduziert werden. Ein Angreifer kann somit bei der herkömmlichen Vorgehensweise zur Übertragung von Daten nicht nur einen Denialof-Service-Angriff durchführen, sondern auch die Weiterleitung eigener Daten herbeiführen.

Dokument WO2005067538 offenbart elektronische Schutzmechanismen, die an zentraler Stelle Nachrichtenpakete von mehreren Empfangsknoten auswerten und eine nachgeordnete Authentifizierungsvorrichfiung, wobei die RF-Bearbeitungseinheit und die Wasserzeichen-Entnahme-Einheit zusammen nachfolgend als Authentisierungsvorrichtung bezeichnet wird, die die Nachrichtenpakete prüft. Bei der beschriebenen Methode werden die Nachrichtenpakete zu einer zentralen RF-Bearbeitungsvorrichtung ohne vorherige Prüfung weitergeleitet.

Es ist daher eine Aufgabe der vorliegenden Erfindung ein Verfahren und eine Vorrichtung zum Übertragen einer Nachricht von einer Sendeeinheit zu einer Empfangseinheit zu schaffen, die sicher gegenüber derartige Angriffen sind.

Diese Aufgabe wird erfindungsgemäß durch ein Verfahren mit den im Patentanspruch 1 angegebenen Merkmalen gelöst.

Bei einer Ausführungsform des erfindungsgemäßen Verfahrens wird die von der Sendeeinheit abgegebene Nachricht von einem Sende-Antennen-Array, welches mehrere Sendeknoten aufweist, zu dem Empfangs-Antennen-Array gesendet.

Bei einer Ausführungsform des erfindungsgemäßen Verfahrens erfolgt das Verifizieren der empfangenen Nachricht durch die Empfangsknoten anhand eines von den Sendeknoten des Sende-Antennen-Arrays an die Empfangsknoten des Empfangs-Antennen-Arrays ausgesendeten Authentifizierungstokens.

Bei einer Ausführungsform des erfindungsgemäßen Verfahrens wird das Authentifizierungstoken durch ein zwischen der Sendeeinheit und der Empfangseinheit zuvor ausgetauschten generierten Zufallswert gebildet.

Bei einer Ausführungsform des erfindungsgemäßen Verfahrens wird das Authentifizierungstoken durch einen Wert einer Hash-Kette gebildet.

Bei einer Ausführungsform des erfindungsgemäßen Verfahrens erfolgt das Verifizieren der empfangenen Nachricht durch die Empfangsknoten anhand einer erwarteten Nachrichtenlänge.

Bei einer alternativen Ausführungsform des erfindungsgemäßen Verfahrens verfolgt das Verifizieren der empfangenen Nachricht anhand eines erwarteten Übertragungsmusters.

Bei einer Ausführungsform des erfindungsgemäßen Verfahrens rekonstruiert jeder Empfangsknoten des Empfangs-Antennen-Arrays auf Basis der von ihm empfangenen verifizierten Nachricht eine der von den Sendeknoten des Sende-Antennen-Arrays ausgesendeten Nachricht ähnliche, noch mit Übertragungsfehlern behaftete, Nachricht und leitet diese zur endgültigen Rekonstruktion der gesendeten Nachricht an die Empfangseinheit weiter.

Bei einer Ausführungsform des erfindungsgemäßen Verfahrens rekonstruiert die Empfangseinheit auf Basis der von den Empfangsknoten des Empfangs-Antennen-Arrays an die Empfangseinheit weitergeleiteten, verifizierten und noch mit Übertragungsfehlern behafteten Nachricht, die von den Sendeknoten des Sende-Antennen-Arrays ursprünglich ausgesendete Nachricht.

Bei einer alternativen Ausführungsform des erfindungsgemäßen Verfahrens leiten die Empfangsknoten des Empfangs-Antennen-Arrays die von ihnen jeweils empfangene verifizierte Nachricht direkt an die Empfangseinheit weiter, wobei die Empfangseinheit auf Basis aller von den Empfangsknoten an sie weitergeleiteten verifizierten Nachrichten, die von den Sendeknoten des Sende-Antennen-Arrays ausgesendete ursprüngliche Nachricht rekonstruiert.

Bei einer weiteren Ausführungsform des erfindungsgemäßen Verfahrens übertragen die Sendeknoten des Sende-Antennen-Arrays die Nachricht an die Empfangsknoten des Empfangs-Antennen-Arrays codiert.

Die Erfindung schafft ferner ein System zum sicheren Übertragen einer Nachricht von einer Sendeeinheit zu einer Empfangseinheit gemäß Anspruch 12.

Bei einer Ausführungsform des erfindungsgemäßen Systems erfolgt die Verifizierung der empfangenen Nachricht durch einen Empfangsknoten des Empfangs-Antennen-Arrays anhand eines Authentifizierungstokens, anhand einer erwarteten Nachrichtenlänge oder anhand eines erwarteten Übertragungsmusters.

Die Erfindung schafft ferner einen Empfangs-Antennen-Array gemäß Anspruch 14.

Bei einer möglichen Ausführungsform des erfindungsgemäßen Empfangs-Antennen-Array ist der Empfangsknoten zwischen einem MIMO-(Multiple Input Multiple Output) Betriebsmodus und einem MI-SO- (Multiple Input Single Output) Betriebsmodus umschaltbar.

Die Erfindung schafft ferner ein Empfangsgerät gemäß Anspruch 16.

Die Erfindung schafft ferner ein Computerprogramm mit Programmbefehlen zur Durchführung des Verfahrens zum sicheren Übertragen einer Nachricht von einer Sendeeinheit zu einer Empfangseinheit mit den Schritten.

Die Erfindung schafft ferner einen Datenträger zum Speichern eines derartigen Computerprogramms.

Im Weiteren werden Ausführungsformen des erfindungsgemäßen Verfahrens und des erfindungsgemäßen Empfangsgerätes sowie des erfindungsgemäßen System zum sicheren Übertragen einer Nachricht von einer Sendeeinheit zu einer Empfangseinheit unter Bezugnahme auf die beigefügten Figuren beschrieben..

Es zeigen:
- Figur 1: ein Diagramm zur Darstellung einer möglichen Ausführungsform eines erfindungsgemäßen Systems zum sicheren Übertragen einer Nachricht;
- Figur 2: ein Ablaufdiagramm zur Darstellung einer möglichen Ausführungsform des erfindungsgemäßen Verfahrens;
- Figur 3: ein Signaldiagramm zur Darstellung einer Ausführungsvariante des erfindungsgemäßen Verfahrens;
- Figur 4: ein weiteres Signaldiagramm zur Darstellung einer Ausführungsvariante des erfindungsgemäßen Verfahrens;
- Figur 5: ein weiteres Signaldiagramm zur Darstellung einer weiteren Ausführungsvariante des erfindungsgemäßen Verfahrens.

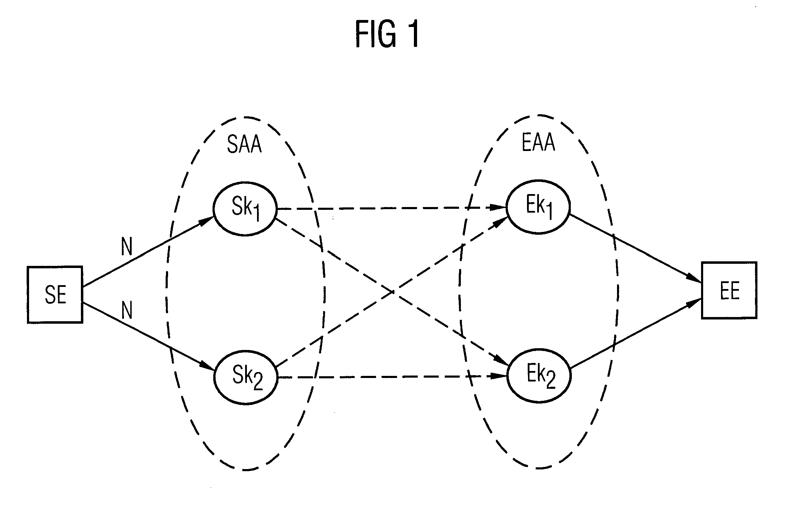

Wie man aus Figur 1 erkennen kann umfasst bei der dort dargestellten Ausführungsvariante das erfindungsgemäße System zum sicheren Übertragen einer Nachricht von einer Sendeeinheit SE zu einer Empfangseinheit, EE ein mit der Sendeeinheit SE verbundenes Sende-Antennen-Array SAA und ein mit der Empfangseinheit EE verbundenes Empfangs-Antennen-Array EAA. Das Sende-Antennen-Array SAA umfasst dabei mehrere Sendeknoten SK und das Empfangs-Antennen-Array EAA weist mehrere Empfangsknoten EK auf. Diese Sendeknoten SK beziehungsweise Empfangsknoten EK stellen eigenständige Instanzen dar, das heißt sie bilden voneinander getrennte Knoten. Jeder der Empfangsknoten EK kann eine eigene Empfangsantenne aufweisen. In gleicher Weise kann jeder Sendeknoten SK des Sende-Antennen-Arrays SAA eine eigene Sendeantenne aufweisen. Eine von der Sendeeinheit SE abgegebene Nachricht wird von dem Sendeknoten SK des Sende-Antennen-Arrays SAA an das Empfangs-Antennen-Array EAA ausgestrahlt beziehungsweise ausgesendet. Die Sendeeinheit SE überträgt die Nachrichten zunächst an die Sendeknoten SK des Sende-Antennen-Arrays SAA, das heißt an die Sendeknoten SK1, SK2, wie in Figur 1 dargestellt. Das Sende-Antennen-Array SAA kann eine Vielzahl von Sendeknoten SK umfassen, beispielsweise N-Sendeknoten SK. Diese Sendeknoten SK senden die Nachricht aus. Dabei kann das Aussenden der Nachricht bei einer möglichen Ausführungsform in modifizierter Form, beispielsweise codiert erfolgen. Die Empfangsknoten EK des Empfangs-Antennen-Arrays EAA, das heißt die Empfangsknoten EK1, EK2, wie sie in Figur 1 dargestellt sind, empfangen jeweils diese ausgestrahlten Nachrichten der Sendeknoten SK1 und SK2. Dabei ist es möglich, dass die Empfangsknoten EK1, EK2 eine Nachricht gegebenenfalls unvollständig beziehungsweise fehlerbehaftet empfangen. Die Empfangsknoten EK1, EK2 leiten bei einer möglichen Ausführungsform die empfangenen Daten beziehungsweise Informationen an die Empfangseinheit EE weiter, die daraufhin die ursprüngliche Nachricht rekonstruiert. Bei dem erfindungsgemäßen Verfahren erfolgt eine Verifizierung der empfangenen Nachricht durch die Empfangsknoten EK des Empfangs-Antennen-Arrays EAA als von einer autorisierten Sendeeinheit SE stammend bevor diese verifizierte Nachricht von dem jeweiligen Empfangsknoten EK an die Empfangseinheit EE weitergeleitet wird.

Bei einer möglichen Ausführungsform des erfindungsgemäßen Verfahrens erfolgt das Verifizieren der empfangenen Nachricht durch die Empfangsknoten EK anhand eines von den Sendeknoten SK des Sende-Antennen-Arrays SAA an die Empfangsknoten EK des Empfangs-Antennen-Arrays EAA ausgesendeten Authentifizierungstokens. Bei einer Ausführungsvariante wird das Authentifizierungstoken durch eine zwischen der Sendeeinheit SE und der Empfangseinheit EE zuvor ausgetauschten generierten Zufallszahl beziehungsweise Zufallswert gebildet. Bei einer Ausführungsform des erfindungsgemäßen Verfahrens wird eine Prüfinformation des der Sendeeinheit SE zugeordneten Sende-Antennen-Arrays SAA jeweils durch die Sendeknoten SK des Sende-Antennen-Arrays SAA hinzugefügt. Bei einer Ausführungsvariante kann bereits durch die Sendeeinheit SE diese Prüfinformation hinzugefügt werden. Bei beiden Ausführungsvarianten erfolgt eine Überprüfung der hinzugefügten Prüfinformation durch die Empfangsknoten EK des Empfangs-Antennen-Arrays EAA. Diese Prüfinformation wird beispielsweise durch das oben genannte Authentifizierungstoken gebildet. Abhängig von der empfangsseitig durchgeführten Überprüfung der Prüfinformation beziehungsweise des Authentifizierungstokens werden die von den Empfangsknoten EK jeweils empfangenen Daten an die Empfangseinheit EE weitergeleitet. Die Prüfinformation beziehungsweise das Authentifizierungstoken dient zur Authentifizierung, ob die empfangenen Daten von dem Sende-Antennen-Array SAA der Sendeeinheit SE stammen. Bei einer möglichen Ausführungsform wird die Prüfinformation beziehungsweise das Authentifizierungstoken mit einem fehlerkorrigierendem Kodierungsverfahren codiert übertragen, damit selbst bei Übertragungsfehlern auf der Schnittstelle zwischen dem Sende-Antennen-Array SAA und dem Empfangs-Antennen-Array EAA die Daten durch die Empfangsknoten EK des Empfangs-Antennen-Arrays EAA noch korrekt decodiert werden.

Bei einer Ausführungsvariante wird die Prüfinformation durch eine kryptographische Prüfsumme gebildet. Weiterhin ist es möglich ein sogenanntes Security-Token, das heißt eine Information ähnlich einem Zugangspasswort einzusetzen. Konkret kann es sich dabei um eine bestimmte Bitfolge handeln. Während die kryptographische Prüfsumme an die Daten gebunden ist, das heißt sie wird bei Modifikation der Daten ungültig, ist dies bei dem Security-Token nicht der Fall. Daher ist die Verwendung eines Security-Tokens vorteilhaft, wenn gezielt auch fehlerhaft empfangene Daten zu überprüfen sind.

Die zum Berechnen beziehungsweise Prüfen der hinzugefügten Prüfinformation benötigte Referenzinformation kann auf unterschiedliche Arten den Knoten des Sende-Antennen-Arrays SAA beziehungsweise den Empfangsknoten EK des Empfangs-Antennen-Arrays EAA bekannt gemacht werden. Beispielsweise kann im Rahmen eines der eigentlichen Datenübertragung vorausgehenden RTC/CTS-Austausches zwischen der Sendeeinheit SE und der Empfangseinheit EE eine Referenzinformation mit übertragen werden. Die Arrayknoten, das heißt die Sendeknoten SK des Sende-Empfangs-Antennen-Arrays SAA und die Empfangsknoten EK des Empfangs-Antennen-Arrays EAA können die mitübertragenen Referenzinformationen mithören und bei einer möglichen Ausführungsvariante lokal speichern. Bei einer alternativen Ausführungsform erhalten die Knoten des Sende-Antennen-Arrays SAA die Referenzinformation von der Sendeeinheit SE beziehungsweise der Empfangseinheit EE.

Bei einer Ausführungsvariante können die Sendeeinheit SE und die Empfangseinheit EE aus einer bestehenden Ende-zu-Ende-Sicherheitsbeziehung mittels einer Schlüssel-Ableitung jeweils eine Referenzinformation ableiten. Dabei kann die Sendeeinheit SE die abgeleitete Referenzinformation den Sendeknoten SK des Sende-Antennen-Arrays SAA bereitstellen und die Empfangseinheit EE kann die abgeleitete Referenzinformation den Empfangsknoten EK des Empfangs-Antennen-Arrays EAA bereitstellen.

Zur Authentifizierung des Sende-Antennen-Arrays SAA gegenüber dem Empfangs-Antennen-Arrays EAA können bei dem erfindungsgemäßen Verfahren verschiedene Methoden zum Einsatz kommen. Dabei werden nicht die einzelnen Instanzen beziehungsweise Knoten des Sende-Antennen-Arrays SAA authentifiziert, sondern der Sende-Antennen-Array SAA wird als Ganzes gegenüber dem Empfangs-Antennen-Array EAA authentifiziert. Bei einer Ausführungsvariante wird zur Authentifizierung eine kryptographische Prüfsumme der übertragenen Daten verwendet. Dazu kann beispielsweise ein Schlüssel herangezogen werden, den die Sendeeinheit SE und die Empfangseinheit EE zuvor ausgetauscht haben. Dieser ausgetauschte Schlüssel macht die Sendeeinheit SE die Instanzen beziehungsweise Sendeknoten SK des Sende-Antennen-Arrays SAA und die Empfangseinheit EE den Instanzen beziehungsweise Empfangsknoten EK des Empfangs-Antennen-Arrays EAA bekannt. Dies geschieht mittels vertraulicher und integritätsgeschützter Datenübertragung. Die Übersendung einer kryptographischen Prüfsumme, beispielsweise MAC, ist nur möglich, falls die Daten auf jeder einzelnen Instanz beziehungsweise jedem einzelnen Knoten des Empfangs-Antennen-Arrays EAA rekonstruiert werden. Aufgrund von Übertragungsfehlern erhalten in vielen Fällen die rekonstruierten Daten jedoch noch Fehler, so dass in diesen Fällen auch die Überprüfung der kryptographischen Prüfsumme scheitern kann. Es wird daher in einer bevorzugten Ausführungsvariante des erfindungsgemäßen Verfahrens ein Authentifizierungstoken verwendet, welches zusammen mit den eigentlichen Daten übertragen wird, beispielsweise vorangestellt. Nur wenn dieses Authentifizierungstoken erfolgreich von den jeweiligen Empfangsknoten EK beziehungsweise Instanzen des Empfangs-Antennen-Arrays EAA empfangen wird, werden die restlichen Daten beziehungsweise Nutzdaten empfangen beziehungsweise bearbeitet, beispielsweise an die Empfangseinheit EE weitergeleitet.

Authentifizierungstoken können auch dann eingesetzt werden, wenn die Empfangsknoten EK des Empfangs-Antennen-Arrays EAA die ursprünglich gesendeten Daten nicht rekonstruieren, sondern diese Rekonstruktion erst durch die Empfangseinheit EE erfolgt.

Die Rekonstruktion der Daten kann bei einer möglichen Ausführungsvariante zweistufig erfolgen, nämlich zunächst durch die Empfangsknoten EK des Empfangs-Antennen-Arrays EAA und anschließend durch die Empfangseinheit EE. Bei dieser Ausführungsvariante rekonstruiert jeder Empfangsknoten EK des Empfangs-Antennen-Arrays EAA auf Basis der von ihm empfangenen verifizierten Nachricht eine von dem Sendeknoten SK des Sende-Antennen-Arrays SAA ausgesendeten Nachricht ähnliche, noch mit Übertragungsfehlern behaftete, Nachricht und leitet diese noch mit Übertragungsfehlern behaftete Nachricht zur endgültigen Rekonstruktion der gesendeten Nachricht an die Empfangseinheit EE weiter. Die Empfangseinheit EE rekonstruiert anschließend auf Basis der von den verschiedenen Empfangsknoten EK des Empfangs-Antennen-Arrays EAA empfangenen beziehungsweise an sie weitergeleiteten, verifizierten jedoch noch mit Übertragungsfehlern behafteten Nachrichten die von dem Sendeknoten SK des Sende-Antennen-Arrays SAA ausgesendete ursprüngliche Nachricht.

Bei einer alternativen Ausführungsvariante erfolgt die Rekonstruktion der ursprünglichen Nachricht allein durch die Empfangseinheit EE. Dabei leiten die Empfangsknoten EK des Empfangs-Antennen-Arrays EAA die von ihnen jeweils empfangene verifizierte Nachricht direkt an die Empfangseinheit weiter, wobei die Empfangseinheit EE anschließend auf Basis aller von den Empfangsknoten EK an sie weitergeleiteten verifizierten Nachrichten, die von den Sendeknoten SK des Sende-Antennen-Arrays SAA ausgesendeten Nachricht rekonstruiert.

Erfolgt die Rekonstruktion der ursprünglich gesendeten Daten beziehungsweise Nachricht nicht durch die Instanzen des Empfangs-Antennen-Arrays EAA sondern erst durch die Empfangseinheit EE wird vorzugsweise das Authentifizierungstoken nicht mittels eines MIMO-Verfahrens sondern mittels eines MISO-Verfahrens übertragen. Dies ist in einfacher Weise implementierbar, da dazu auf Sendeseite lediglich eine andere Kodierung gewählt werden muss. Einzelne Instanzen beziehungsweise Knoten des Empfangs-Antennen-Arrays EAA können dann das Authentifizierungstoken, das mittels des MISO-Verfahrens übertragen wurde, selbstständig übertragen und somit die von dem Sende-Antennen-Array SAA ausgesendeten Daten authentifizieren.

Bei einer Ausführungsvariante wird das Authentifizierungstoken durch einen Zufallswert gebildet, der zwischen der Sendeeinheit SE und der Empfangseinheit EE beispielsweise durch voriges RTS/CTS ausgetauscht wird.

Bei einer weiteren Ausführungsvariante wird das Authentifizierungstoken durch einen Wert einer Hash-Kette gebildet. Dazu teilt die Sendeeinheit SE der Empfangseinheit EE zum Beispiel im Rahmen eines RTS/CTS die Verpflichtung zum Einsatz einer bestimmten Hash-Kette mit. Der jeweils nächste Wert H (n-1) der Hash-Kette wird dann als Authentifizierungstoken herangezogen. In dieser Ausführungsvariante ist es möglich, nicht nur einmal sondern mehrmalig Daten zu versenden, ohne dass dabei jedes Mal den Empfangsknoten EK des Empfangs-Antennen-Arrays EAA ein neues Authentifizierungstoken mitzuteilen ist. Es wird jeweils das vorhergehende Element beziehungsweise Glied aus der Hash-Kette als Authentifizierungstoken zur Verifizierung herangezogen, also nacheinander: H(n-1), H(n-2), H(n-3), ... H(0).

Bei einer weiteren Ausführungsform des erfindungsgemäßen Verfahrens erfolgt das Verifizieren der empfangenen Nachricht durch die Empfangsknoten EK anhand einer erwarteten Nachrichtenlänge. Bei dieser Ausführungsform erfolgt die Authentifizierung des Sende-Antennen-Arrays SAA gegenüber den Instanzen des Empfangs-Antennen-Arrays EAA mittels Angaben über die Menge der zu empfangenen Daten. Diese zu erwartende Nachrichtenlänge teilt die Empfangseinheit EE den Empfangsknoten EK des Empfangs-Antennen-Arrays EAA mit. Ein Empfänger kennt die Anzahl der zu empfangenen Daten beziehungsweise die Nachrichtenlänge beispielsweise dann, wenn zuvor ein Austausch mit der Sendeeinheit SE stattgefunden hat, der die Übertragung ankündigt. Bei dieser Ausführungsvariante leiten die Empfangsknoten EK des Empfangs-Antennen-Arrays EAA die empfangenen Daten beziehungsweise Nachrichten an die Empfangseinheit EE nur weiter, wenn die empfangenen Daten beziehungsweise die Nachricht die erwartete Nachrichtenlänge besitzt.

Bei einer weiteren Ausführungsform des erfindungsgemäßen Verfahrens erfolgt die Authentifizierung des Sende-Antennen-Arrays SAA gegenüber den Empfangsknoten EK des Empfangs-Antennen-Arrays EAA anhand eines erwarteten Übertragungsmuster beziehungsweise eines Traffic-Patterns der zu empfangenen Daten. Ein Beispiel für ein derartiges Datenübertragungsmuster besteht darin, dass Nachrichten beispielsweise alle zehn Sekunden übertragen werden. Diese Übertragungsmuster teilt die Empfangseinheit EE den Empfangsknoten EK des Empfangs-Antennen-Arrays EAA mit. Die Empfangseinheit EE kennt ihrerseits das Traffic-Pattern beziehungsweise das Übertragungsmuster beispielsweise aufgrund eines zuvor erfolgten Austausches mit der Sendeeinheit SE, etwa im Rahmen eines RTS/CTS-Austausches. Weiterhin ist es möglich, dass die Empfangseinheit EE das Datenübertragungsmuster aufgrund der jeweiligen Anwendung bekannt ist, beispielsweise bei einer periodischen Messwertübertragung. In dieser Ausführungsform leiten die Empfangsknoten EK des Empfangs-Antennen-Arrays EAA die empfangenen Daten nur weiter, wenn die Übertragung der Nachrichten dem vorbestimmten Übertragungsmuster entspricht.

Bei einer möglichen Ausführungsvariante überträgt die Empfangseinheit EE Prüfkriterien für Nutzdaten an die Empfangsknoten EK des Empfangs-Antennen-Arrays EAA. Da diese Nutzdaten auf Seiten der Empfangsknoten des EK Empfangs-Antennen-Arrays EAA eventuell aufgrund von Übertragungsfehlern modifiziert sind, erfolgt bei dieser Ausführungsvariante lediglich eine Ähnlichkeitsprüfung. Beispielsweise kann ein erwarteter Wert für eine Sendeadresse, eine Empfängeradresse oder ein Nutzdateninhalt vorgegeben sein. Bei hinreichender Ähnlichkeit werden die empfangenen Daten von den Empfangsknoten des Empfangs-Antennen-Arrays EAA an die Empfangseinheit EE weitergeleitet. Eine hinreichende Ähnlichkeit kann beispielsweise darin bestehen, dass sich die Daten maximal in n-Bit unterscheiden.

Bei einer möglichen Ausführungsform des erfindungsgemäßen Systems ist die Datenübertragung von der Sendeeinheit SE zu den Knoten des Sende-Antennen-Arrays SAA sowie die Übertragung von Daten von den Knoten des Empfangs-Antennen-Arrays EAA zu der Empfangseinheit EE ebenfalls kryptographisch geschützt. Dies kann beispielsweise mittels einer kryptographischen Prüfsumme MAC (Message Authentification Code) geschehen. Dabei authentifiziert die Sendeeinheit SE eine Nachricht gegenüber dem Sendeknoten SK des Sende-Antennen-Arrays SAA. Dies kann beispielsweise mittels bestehender Sicherheitsbeziehungen zwischen den Instanzen des Sende-Antennen-Arrays SAA und der Sendeeinheit SE geschehen. Alternativ kann eine weitere Sicherheitsbeziehung eingerichtet werden. Verschiedene Ausprägungen einer derartigen Sicherheitsbeziehung sind möglich. Bei einer möglichen Ausführungsform besteht eine Sicherheitsbeziehung für ein Link, das heißt zwischen der Sendeeinheit SE und einem der Sendeknoten SK des Sende-Antennen-Arrays SAA, beispielsweise mittels eines zugehörigen Link-Keys. Bei einer alternativen Ausführungsform besteht eine Sicherheitsbeziehung zwischen der Sendeeinheit SE und allen Sendeknoten SK des Sende-Antennen-Arrays SAA, zum Beispiel ein Sende-Antennen-Array-Schlüssel, der von der Sendeeinheit SE allen Sendeknoten SK beziehungsweise Instanzen des Sende-Antennen-Arrays SAA bekannt gemacht wird. Weiterhin ist es möglich, dass eine Sicherheitsbeziehung zwischen allen Knoten des Netzwerkes besteht, beispielsweise ein Netzwerkschlüssel.

Auch die Instanzen beziehungsweise Empfangsknoten EK des Empfangs-Antennen-Arrays EAA können ihre Nachrichten gegenüber der Empfangseinheit EE authentifizieren. Auch hier können bestehende Sicherheitsbeziehungen zum Einsatz kommen oder neue Sicherheitsbeziehungen herangezogen werden.

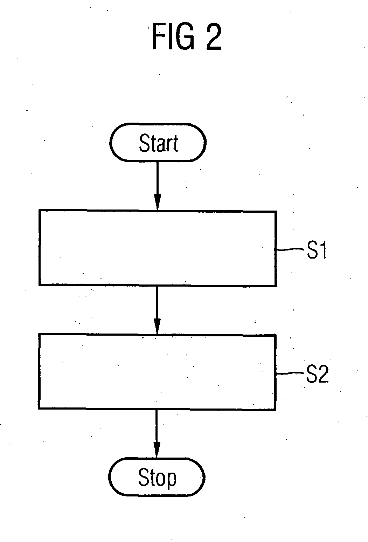

Figur 2 zeigt ein einfaches Ablaufdiagramm zur Darstellung einer möglichen Ausführungsform des erfindungsgemäßen Verfahrens zum sicheren Übertragen einer Nachricht von einer Sendeeinheit SE zu einer Empfangseinheit EE, wie sie in Figur 1 dargestellt sind.

In einem Schritt S1 wird eine von der Sendeeinheit SE abgegebene Nachricht zu einem Empfangs-Antennen-Array EAA, welches mehrere Empfangsknoten EK aufweist, ausgesendet. Dabei wird die Nachricht in der Regel von Sendeknoten SK eines Sende-Antennen-Arrays SAA ausgesendet, wie in Figur 1 dargestellt.

In einem zweiten Schritt S2 erfolgt eine Verifizierung der empfangenen Nachricht durch die Empfangsknoten EK des Empfangs-Antennen-Arrays EAA als von einer autorisierten Sendeeinheit SE stammend. Ist der Verifizierungsvorgang erfolgreich, wird die verifizierte Nachricht in Schritt S2 von den jeweiligen Empfangsknoten EK an die Empfangseinheit EE weitergeleitet.

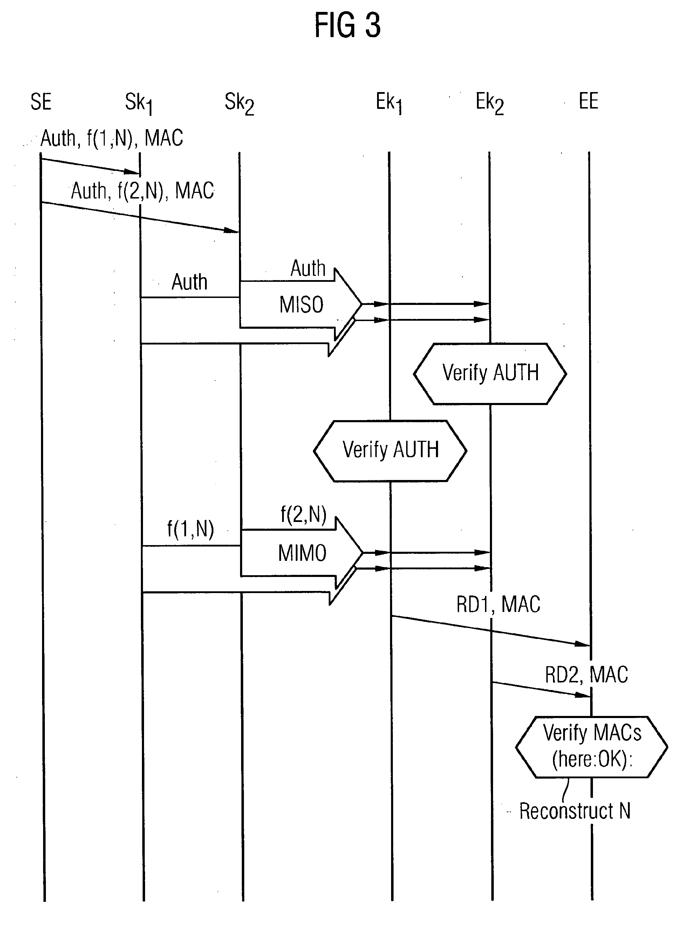

Figur 3 zeigt eine Ausführungsvariante des erfindungsgemäßen Verfahrens. Bei dieser Ausführungsvariante sind die Instanzen beziehungsweise Knoten EK des Empfangs-Antennen-Arrays EAA in der Lage aus den empfangenen Daten die ursprüngliche Nachricht selbstständig zu rekonstruieren. Die Sendeeinheit SE sendet eine Nachricht N sowie ein Authentifizierungstoken Auth an die Sendeknoten SK1 beziehungsweise SK2 des Sende-Antennen-Arrays SAA. Diese Übertragung wird durch eine kryptographische Prüfsumme geschützt. Bei einer möglichen Variante kann diese kryptographische Prüfsumme unterschiedlich für die beiden Knoten SK1, SK2 des Sende-Antennen-Arrays SAA sein. Anschließend versenden die Sendeknoten SK1, SK2 des Sende-Antennen-Arrays SAA jeweils per kooperativem MIMO das ihnen übergebene Authentifizierungstoken über eine Luftschnittstelle beziehungsweise Funkschnittstelle an das Empfangs-Antennen-Array EAA. Die Empfangsknoten EK1, EK2 des Empfangs-Antennen-Arrays EAA überprüfen das übersendete Authentifizierungstoken. Wird das übertragene geheime Authentifizierungstoken durch die Empfangsknoten EKi des Empfangs-Antennen-Arrays EAA als gültig verifiziert, übertragen anschließend die Sendeknoten SK1, SK2 des Sende-Antennen-Arrays SAA per kooperativem MIMO-Verfahren die Nachricht N an das Empfangs-Antennen-Array EAA. Die Empfangsknoten EK1, EK2 rekonstruieren jeweils die Nachricht und leiten die empfangenen rekonstruierten Daten RD1, RD2 jeweils an die Empfangseinheit EE weiter, wobei sie die Nachricht mit einer kryptographischen Prüfsumme MAC schützten. Auch empfangsseitig kann diese kryptographische Prüfsumme für die beiden Empfangsknoten EK1, EK2 unterschiedlich sein. Die Empfangseinheit EE bestimmt aus den empfangenen und rekonstruierten Daten die ursprünglich von der Sendeeinheit SE stammende Nachricht N. Bei der in Figur 3 dargestellten Ausführungsvariante wird das Authentifizierungstoken Auth und die Nachricht N getrennt übertragen. Bei einer weiteren Ausführungsvariante kann das Authentifizierungstoken Auth und die Nachricht N auch gemeinsam übertragen werden. Dabei wird vorzugsweise das Authentifizierungstoken Auth den Daten der Nachricht N vorangestellt übertragen.

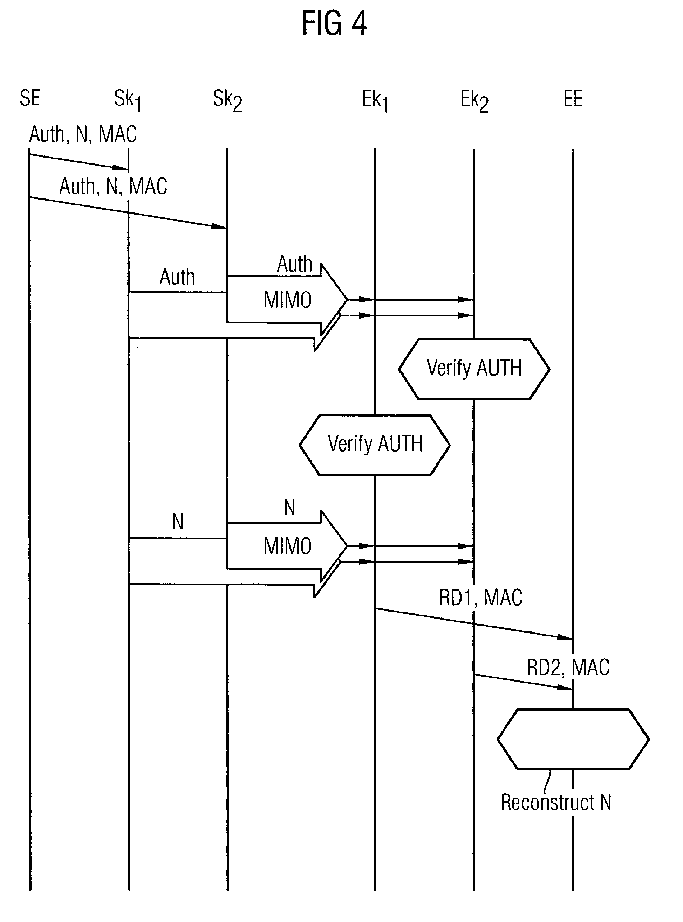

Figur 4 zeigt ein Signaldiagramm zur Darstellung einer weiteren Ausführungsvariante des erfindungsgemäßen Verfahrens. Bei diesem Ausführungsbeispiel gemäß Figur 4 werden die von den Knoten EK des Empfangs-Antennen-Arrays EAA empfangenen Daten durch diese nicht selbstständig rekonstruiert, sondern die Rekonstruktion erfolgt erst durch die Empfangseinheit EE. Wie in Figur 4 dargestellt, kann die Sendeeinheit SE die zu übertragende Nachricht N mit einer Kodierungsfunktion kodiert an die Sendeknoten SK des Sende-Antennen-Arrays SAA übertragen. Die Sendeeinheit SE sendet f(1,N) beziehungsweise f(2,N) sowie ein Authentifizierungstoken Auth an die Sendeknoten SK1, SK2. Die Übertragung kann durch eine kryptographische Prüfsumme MAC geschützt sein. Die Sendeknoten Sk1, SK2 des Sende-Antennen-Arrays SAA senden, wie in Figur 4 dargestellt, per kooperativen MISO diese Authentifizierungstoken an das Empfangs-Antennen-Array EAA. Die Empfangsknoten EK1, EK2 des Empfangs-Antennen-Arrays EAA überprüfen das empfangene Authentifizierungstoken. Ist die Verifizierung erfolgreich, übertragen anschließend die Sendeknoten SK1, SK2 per kooperativem MIMO die kodierte Nachricht f(1,N), sowie f(2,N) an das Empfangs-Antennen-Array EAA. Die Empfangsknoten EK1, EK2 des Empfangs-Antennen-Arrays EAA übertragen die empfangenen Daten RD1, RD2 an die Empfangseinheit EE, wobei sie diese Nachricht mit einer kryptographischen Prüfsumme MAC schützten. Die Empfangseinheit EE rekonstruiert aus den von den Empfangsknoten EK1, EK2 empfangenen Daten die ursprünglich von der Sendeeinheit SE stammende Nachricht N. In dem in Figur 4 dargestellten Ausführungsbeispiel erfolgt die Übertragung des Authentifizierungstoken Auth und der in diesem Falle kodierten Nachricht N getrennt. Bei einer Variante ist es auch möglich dass das Authentifizierungstoken Auth und die Nachricht gemeinsam übertragen werden. Dabei wird vorzugsweise das Authentifizierungstoken Auth den Daten der Nachricht N vorangestellt übertragen.

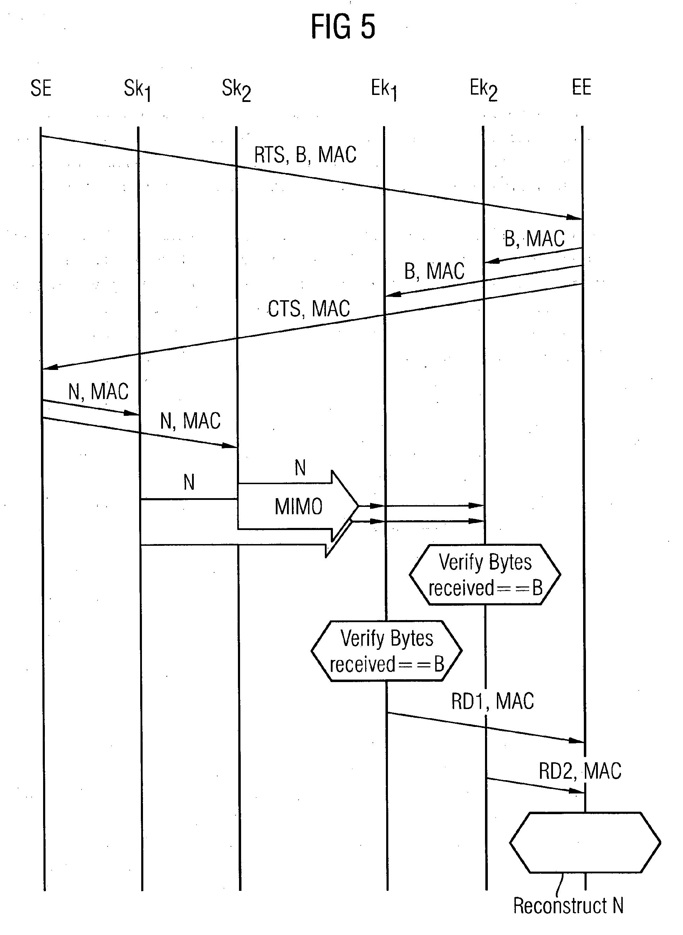

Figur 5 zeigt ein weiteres Ausführungsbeispiel des erfindungsgemäßen Verfahrens. In dieser Variante erfolgt die Authentifizierung anhand einer übermittelten Anzahl von Bytes beziehungsweise einer erwarteten Nachrichtenlänge. Dazu sendet die Sendeeinheit SE im dargestellten Ausführungsbeispiel eine RTS-Nachricht an die Empfangseinheit EE. Darüber hinaus teilt die Sendeeinheit SE der Empfangseinheit EE mit, dass sie Nachrichten einer bestimmten Länge, beispielsweise mit einer Länge von B-Bytes senden wird. Geschützt wird diese Nachricht durch eine kryptographische Prüfsumme MAC. Die Empfangseinheit EE teilt, wie in Figur 5 dargestellt, den Instanzen beziehungsweise Empfangsknoten EK des Empfangs-Antennen-Arrays EAA, das heißt den Empfangsknoten EK1, EK2, die Anzahl B erwarteter Bytes mit. Diese Nachrichten schützt die Empfangseinheit EE ebenfalls mit einer kryptographischen Prüfsumme. Anschließend teilt die Empfangseinheit EE der Sendeeinheit SE mittels einer CTS-Nachricht mit, dass sie bereit ist Nachrichten zu empfangen. Auch diese Nachricht kann mit einer kryptographischen Prüfsumme geschützt sein. Die Sendeeinheit SE sendet anschließend die zu übertragende Nachricht N an die Instanzen beziehungsweise Knoten des Sende-Antennen-Arrays SAA, das heißt an die Sendeknoten SK1, SK2. Diese Sendeknoten SK1, SK2 versenden anschließend die Nachricht per kooperativem MIRO an das Empfangs-Antennen-Array EAA. Die Instanzen beziehungsweise Empfangsknoten EK des Empfangs-Antennen-Arrays EAA überprüfen ob sie die korrekte Anzahl von Bytes erhalten haben, beziehungsweise ob die empfangenen Daten der erwarteten Nachrichtenlänge entsprechen. Nur wenn dies der Fall ist leiten die Empfangsknoten EK des Empfangs-Antennen-Arrays EAA die empfangenen Daten RD1, RD2 an die Empfangseinheit EE weiter, wobei dies durch eine kryptographische Prüfsumme MAC geschützt erfolgen kann. Die Empfangseinheit EE rekonstruiert dann aus den von den Empfangsknoten EK weitergeleiteten Daten die ursprünglich von der Sendeeinheit SE stammende Nachricht N.

## Patentansprüche

1. Verfahren zum sicheren Übertragen einer Nachricht (N) von einer Sendeeinheit (SE) zu einer Empfangseinheit (EE) mit den Schritten:
a) Senden (S1) der von der Sendeeinheit (SE) abgegebenen Nachricht, zu einem Empfangs-Antennen-Array (EAA), welches mehrere Empfangsknoten (EK) aufweist;
b) Verifizieren (S2) der empfangenen Nachricht durch den jeweiligen Empfangsknoten (EK) anhand einer von der Sendeeinheit (SE) an die Empfangsknoten (EK) des Empfangs-Antennen-Arrays (EAA) ausgesendeten Prüfinformation ; und
c) Weiterleiten der als von einer autorisierten Sendeeinheit (SE) stammenden verifizierten Nachricht von dem jeweiligen Empfangsknoten (EK) an die Empfangseinheit (EE).

2. Verfahren nach Anspruch 1,
wobei die von der Sendeeinheit (SE) abgegebene Nachricht von einem Sende-Antennen-Array (SAA), welches mehrere Sendekonten (SK) aufweist, zu den Empfangs-Antennen-Array (EAA) gesendet wird.

3. Verfahren nach Anspruch 2,
wobei das Verifizieren der empfangenen Nachricht durch die Empfangsknoten (EK) anhand eines von den Sendeknoten (SK) des Sende-Antennen-Arrays (SAA) an die Empfangsknoten (EK) des Empfangs-Antennen-Arrays (EAA) ausgesendeten Authentifizierungstokens (Auth) erfolgt.

4. Verfahren nach Anspruch 3,
wobei das Authentifizierungstoken (Auth) durch ein zwischen der Sendeeinheit (SE) und der Empfangseinheit (EE) zuvor ausgetauschten generierten Zufallswert gebildet wird.

5. Verfahren nach Anspruch 3 oder 4,
wobei das Authentifizierungstoken (Auth) durch einen Wert einer Hash-Kette gebildet wird.

6. Verfahren nach Anspruch 1,
wobei das Verifizieren der empfangenen Nachricht durch die Empfangsknoten (EK) anhand einer erwartenden Nachrichtenlänge (B) erfolgt.

7. Verfahren nach Anspruch 1,
wobei das Verifizieren der empfangenen Nachricht anhand eines erwarteten Übertragungsmusters erfolgt.

8. Verfahren nach Anspruch 2,
wobei jeder Empfangsknoten (EK) des Empfangs-Antennen-Arrays (EAA) auf Basis der von ihm empfangenen verifizierten Nachricht eine von den Sendeknoten .(SK) des Sende-Antennen-Arrays (SAA) ausgesendeten Nachricht mit Übertragungsfehlern behaftete Nachricht rekonstruiert und diese zur endgültigen Rekonstruktion der gesendeten Nachricht an die Empfangseinheit (EE) weiterleitet.

9. Verfahren nach Anspruch 8,
wobei die Empfangseinheit (EE) auf Basis der von den Empfangsknoten (EK) des Empfangs-Antennen-Arrays (EAA) an die Empfangseinheit (EE) weitergeleiteten, verifizierten und noch mit Übertragungsfehlern behafteten Nachrichten, die von den Sendeknoten (SK) des Sende-Antennen-Arrays (SAA) ausgesendete Nachricht rekonstruiert.

10. Verfahren nach Anspruch 1,
wobei die Empfangsknoten (EK) des Empfangs-Antennen-Arrays (EAA) die von ihnen jeweils empfangene verifizierte Nachricht direkt an die Empfangseinheit (EE) weiterleiten, wobei die Empfangseinheit (EE) auf Basis aller von den Empfangsknoten (EK) an sie weitergeleiteten verifizierten Nachrichten, die von den Sendeknoten (SK) des Sende-Antennen-Arrays (SAA) ausgesendete Nachricht rekonstruiert.

11. Verfahren nach Anspruch 1,
wobei die Sendeknoten (SK) des Sende-Antennen-Arrays (SAA) die Nachricht an die Empfangsknoten (EK) des Empfangs-Antennen-Arrays (EAA) kodiert übertragen.

12. System zum sicheren Übertragen einer Nachricht (N) von einer Sendeeinheit (SE) zu einer Empfangseinheit (EE) mit:
a) einer Sendeeinheit (SE), die mit einem Sende-Antennen-Array (SAA) verbunden ist, welches mehrere Sendeknoten (SK) aufweist;
b) eine Empfangseinheit (EE), die mit einer Empfangs-Antennen-Array (EAA) verbunden ist, welches mehrere Empfangsknoten (EK) aufweist;
c) wobei jeder Empfangsknoten (EK) des Empfangs-Antennen-Arrays (EAA) eine von den Sendeknoten (SK) des Sende-Antenne-Arrays (SAA) empfangene Nachricht anhand einer von den Sendeknoten (SK) des Sende-Antennen-Arrays (SAA) an die Empfangsknoten (EK) des Empfangs-Antennen-Arrays (EAA) ausgesendeten Prüfinformation als von einer autorisierten Sendeeinheit (SE) stammend verifiziert, wobei der jeweilige Empfangsknoten (EK) die von ihm als von einer autorisierten Sendeeinheit (SE) stammende verifizierte Nachricht an die Empfangseinheit (EE) weiterleitet.

13. System nach Anspruch 12,
wobei die Verifizierung der empfangenen Nachricht durch einen Empfangsknoten (EK) des Empfangs-Antennen-Arrays (EAA) anhand eines Authentifizierungstokens (Auth), anhand einer erwarteten Nachrichtenlänge oder anhand eines erwarteten Übertragungsmusters erfolgt.

14. Empfangs-Antennen-Array (EAA),
wobei die Empfangsknoten (EK) dieses Empfangs-Antennen-Array (EAA) eine von Sendeknoten (SK) eines Spende-Antennen-Arrays (SAA) empfangene Nachricht als eine von einer mit dem Sende-Antennen-Array (SAA) verbundenen autorisierten Sendeeinheit (SE) stammende Nachricht (N) anhand einer von den Sendeknoten (SK) des Sende-Antennen-Arrays (SAA) an die Empfangsknoten (EK) des Empfangs-Antennen-Arrays (EAA) ausgesendeten Prüfinformation verifiziert, wobei der Empfangsknoten (EK) die als von einer autorisierten Sendeeinheit (SE) stammende verifizierte Nachricht an eine Empfangseinheit (EE) weiterleitet.

15. Empfangs-Antennen-Array (EAA) nach Anspruch 14,
wobei der Empfangsknoten (EK) zwischen einem MIMO- (Multiple Input Multiple Output) Betriebsmodus und einem MISO- (Multiple Input Single Output) Betriebsmodus umschaltbar ist.

16. Empfangsgerät mit:
- einem Empfangs-Antennen-Array (EAA), das mehrere Empfangsknoten (EK) aufweist; und mit
- einer Empfangseinheit (EE) zur Rekonstruktion einer gesendeten Nachricht,
wobei jeder Empfangsknoten (EK) des Empfangs-Antennen-Arrays (EAA) eine von Sendeknoten (SK) eines Sende-Antenenn-Arrays (SAA) empfangene Nachricht anhand einer von den Sendeknoten (SK) des Sende-Antennen-Arrays (SAA) an die Empfangsknoten (EK) des Empfangs-Antennen-Arrays (EAA) ausgesendeten Prüfinformation als von einer mit dem Sende-Antennen-Array (SAA) verbundenen autorisierten Sendeeinheit (SE) stammende Nachricht verifiziert, wobei der jeweilige Empfangsknoten (EK) die von ihm als von einer autorisierten Sendeeinheit (SE) stammende verifizierte Nachricht an die Empfangseinheit (EE) zur Rekonstruktion der gesendeten Nachricht weiterleitet.

17. Computerprogramm mit Programmbefehlen zur Durchführung des Verfahrens nach Ansprüchen 1-11.

18. Datenträger, der das Computerprogramm nach Anspruch 17 speichert.

## Claims

1. Method for securely transmitting a message (N) from a transmitter unit (SE) to a receiver unit (EE) having the steps:
a) sending (S1) the message submitted by the transmitter unit (SE) to a receiving-antenna array (EAA) having a plurality of receiving nodes (EK);
b) verifying (S2) the received message by means of the respective receiving node (EK) using checking information emitted by the transmitter unit (SE) to the receiving node (EK) of the receiving-antenna array (EAA); and
c) forwarding of the message verified as originating from an authorised transmitter unit (SE) to the receiver unit (EE) by the respective receiving node (EK).

2. Method according to claim 1,
with the message submitted by the transmitter unit (SE) being sent to the receiving-antenna array (EAA) by a transmitting-antenna array (SAA) having a plurality of transmitting nodes (SK).

3. Method according to claim 2,
with verifying of the received message by the receiving nodes (EK) being performed using an authentication token (Auth) emitted by the transmitting nodes (SK) of the transmitting-antenna array (SAA) to the receiving nodes (EK) of the receiving-antenna array (EAA).

4. Method according to claim 3,
with the authentication token (Auth) being formed by a generated random value previously exchanged between the transmitter unit (SE) and receiver unit (EE).

5. Method according to claim 3 or 4,
with the authentication token (Auth) being formed by a value of a hash chain.

6. Method according to claim 1,
with verifying of the received message by the receiving nodes (EK) being performed using an expected message length (B).

7. Method according to claim 1,
with verifying of the received message being performed using an expected transmission pattern.

8. Method according to claim 2,
with each receiving node (EK) of the receiving-antenna array (EAA) reconstructing, on the basis of the verified message received by it, a message - containing transmitting errors - emitted by the transmitting nodes (SK) of the transmitting-antenna array (SAA) and forwarding it to the receiver unit (EE) for finally reconstructing the message that has been sent.

9. Method according to claim 8,
with the receiver unit (EE), on the basis of the verified messages - still containing transmission errors - that were forwarded to the receiver unit (EE) by the receiving nodes (EK) of the receiving-antenna array (EAA), reconstructing the message emitted by the transmitting nodes (SK) of the transmitting-antenna array (SAA).

10. Method according to claim 1,
with the receiving nodes (EK) of the receiving-antenna array (EAA) forwarding the verified message respectively received by them directly to the receiver unit (EE), with the receiver unit (EE) reconstructing the message emitted by the transmitting nodes (SK) of the transmitting-antenna array (SAA) on the basis of all the verified messages forwarded to said unit by the receiving nodes (EK).

11. Method according to claim 1,
with the transmitting nodes (SK) of the transmitting-antenna array (SAA) transmitting the message to the receiving nodes (EK) of the receiving-antenna array (EAA) in encoded form.

12. System for securely transmitting a message (N) from a transmitter unit (SE) to a receiver unit (EE), having:
a) a transmitter unit (SE) which is connected to a transmitting-antenna array (SAA) having a plurality of transmitting nodes (SK);
b) a receiver unit (EE) which is connected to a receiving-antenna array (EAA) having a plurality of receiving nodes (EK);
c) with each receiving node (EK) of the receiving-antenna array (EAA) verifying a message received from the transmitting nodes (SK) of the transmitting-antenna array (SAA) as originating from an authorised transmitter unit (SE) using checking information emitted by the transmitting nodes (SK) of the transmitting-antenna array (SAA) to the receiving node (EK) of the receiving-antenna array (EAA), with the respective receiving node (EK) forwarding the message verified by it as originating from an authorised transmitter unit (SE) to the receiver unit (EE).

13. System according to claim 12,
with verifying of the received message by a receiving node (EK) of the receiving-antenna array (EAA) being performed using an authentication token (Auth), using an expected message length, or using an expected transmission pattern.

14. Receiving-antenna array (EAA),
with the receiving node (EK) of this receiving-antenna array (EAA) verifying a message received from transmitting nodes (SK) of a transmitting-antenna array (SAA) as a message (N) originating from an authorised transmitter unit (SE) connected to the transmitting-antenna array (SAA) using checking information emitted by the transmitting nodes (SK) of the transmitting-antenna array (SAA) to the receiving node (EK) of the receiving-antenna array (EAA), with the receiving node (EK) forwarding the message verified as originating from an authorised transmitter unit (SE) to a receiver unit (EE).

15. Receiving-antenna array (EAA) according to claim 14, with it being possible to switch the receiving node (EK) over between a MIMO (Multiple Input Multiple Output) operating mode and a MISO (Multiple Input Single Output) operating mode.

16. Receiving device having:
- a receiving-antenna array (EAA) that has a plurality of receiving nodes (EK); and
- a receiver unit (EE) for reconstructing a message that has been sent,
with each receiving node (EK) of the receiving-antenna array (EAA) verifying a message received from transmitting nodes (SK) of a transmitting-antenna array (SAA) as a message originating from an authorised transmitter unit (SE) connected to the transmitting-antenna array (SAA) using checking information emitted by the transmitting nodes (SK) of the transmitting-antenna array (SAA) to the receiving node (EK) of the receiving-antenna array (EAA), with the respective receiving node (EK) forwarding the message verified by it as originating from an authorised transmitter unit (SE) to the receiver unit (EE) for reconstructing the message that has been sent.

17. Computer program having program instructions for implementing the method according to claims 1-11.

18. Data carrier that stores the computer program according to claim 17.

## Revendications

1. Procédé pour la transmission sécurisée d'un message (N) d'une unité émettrice (SE) vers une unité réceptrice (EE), comportant les étapes suivantes :
a) envoi (S1) du message délivré par l'unité émettrice (SE) à un réseau d'antennes réceptrices (EAA) qui comporte plusieurs noeuds récepteurs (EK) ;
b) vérification (S2) du message reçu par le noeud récepteur respectif (EK) à l'aide d'une information de contrôle envoyée par l'unité émettrice (SE) aux noeuds récepteurs (EK) du réseau d'antennes réceptrices (EAA) et
c) retransmission du message vérifié comme provenant d'une unité émettrice autorisée (SE) par le noeud récepteur respectif (EK) à l'unité réceptrice (EE).

2. Procédé selon la revendication 1, le message délivré par l'unité émettrice (SE) étant envoyé au réseau d'antennes réceptrices (EAA) par un réseau d'antennes émettrices (SAA) qui comporte plusieurs noeuds émetteurs (SK).

3. Procédé selon la revendication 2, la vérification du message reçu par les noeuds récepteurs (EK) étant effectuée à l'aide d'un jeton d'authentification (Auth) envoyé par les noeuds émetteurs (SK) du réseau d'antennes émettrices (SAA) aux noeuds récepteurs (EK) du réseau d'antennes réceptrices (EAA).

4. Procédé selon la revendication 3, le jeton d'authentification (Auth) étant formé par une valeur aléatoire générée et préalablement échangée entre l'unité émettrice (SE) et l'unité réceptrice (EE).

5. Procédé selon la revendication 3 ou 4, le jeton d'authentification (Auth) étant formé par une valeur d'une chaîne de hachage.

6. Procédé selon la revendication 1, la vérification du message reçu étant effectuée par les noeuds récepteurs (EK) à l'aide d'une longueur de message attendue (B).

7. Procédé selon la revendication 1, la vérification du message reçu étant effectuée à l'aide d'un motif de transmission attendu.

8. Procédé selon la revendication 2, chaque noeud récepteur (EK) du réseau d'antennes réceptrices (EAA) reconstruisant, sur la base du message vérifié et reçu par lui-même, un message entaché d'erreurs de transmission du message émis par les noeuds émetteurs (SK) du réseau d'antennes émettrices (SAA) et retransmettant ce message à l'unité réceptrice (EE) pour reconstruction définitive du message émis.

9. Procédé selon la revendication 8, l'unité réceptrice (EE) reconstruisant, sur la base des messages retransmis par les noeuds récepteurs (EK) du réseau d'antennes réceptrices (EAA) à l'unité réceptrice (EE), vérifiés et encore entachés d'erreurs de transmission, le message émis par les noeuds émetteurs (SK) du réseau d'antennes émettrices (SAA).

10. Procédé selon la revendication 1, les noeuds récepteurs (EK) du réseau d'antennes réceptrices (EAA) retransmettant directement à l'unité réceptrice (EE) le message respectivement vérifié et reçu par eux-mêmes, l'unité réceptrice (EE) reconstruisant, sur la base de tous les messages vérifiés qui lui sont retransmis par les noeuds récepteurs (EK), le message émis par les noeuds émetteurs (SK) du réseau d'antennes émettrices (SAA).

11. Procédé selon la revendication 1, les noeuds émetteurs (SK) du réseau d'antennes émettrices (SAA) transmettant sous forme codée le message aux noeuds récepteurs (EK) du réseau d'antennes réceptrices (EAA).

12. Système pour la transmission sécurisée d'un message (N) d'une unité émettrice (SE) vers une unité réceptrice (EE), comportant :
a) une unité émettrice (SE) qui est reliée à un réseau d'antennes émettrices (SAA) présentant plusieurs noeuds émetteurs (SK) ;
b) une unité réceptrice (EE) qui est reliée à un réseau d'antennes réceptrices (EAA) comportant plusieurs noeuds récepteurs (EK) ;
c) chaque noeud récepteur (EK) du réseau d'antennes réceptrices (EAA) vérifiant comme provenant d'une unité émettrice autorisée (SE) un message reçu des noeuds émetteurs (SK) du réseau d'antennes émettrices (SAA) à l'aide d'une information de contrôle envoyée par les noeuds émetteurs (SK) du réseau d'antennes émettrices (SAA) aux noeuds récepteurs (EK) du réseau d'antennes réceptrices (EAA), le noeud récepteur respectif (EK) retransmettant à l'unité réceptrice (EE) le message vérifié par lui-même comme provenant d'une unité émettrice autorisée (SE).

13. Système selon la revendication 12, la vérification du message reçu par un noeud récepteur (EK) du réseau d'antennes réceptrices (EAA) s'effectuant à l'aide d'un jeton d'authentification (Auth), à l'aide d'une longueur de message attendue ou à l'aide d'un motif de transmission attendu.

14. Réseau d'antennes réceptrices (EAA), les noeuds récepteurs (EK) de ce réseau d'antennes réceptrices (EAA) vérifiant, à l'aide d'une information de contrôle envoyée par les noeuds émetteurs (SK) du réseau d'antennes émettrices (SAA) aux noeuds récepteurs (EK) du réseau d'antennes réceptrices (EAA), un message reçu des noeuds émetteurs (SK) d'un réseau d'antennes émettrices (SAA) comme étant un message (N) provenant d'une unité émettrice (SE) autorisée reliée au réseau d'antennes émettrices (SAA), le noeud récepteur (EK) retransmettant à une unité réceptrice (EE) le message vérifié comme provenant d'une unité émettrice autorisée (SE).

15. Réseau d'antennes réceptrices (EAA) selon la revendication 14, le noeud récepteur (EK) pouvant être commuté entre un mode de fonctionnement MIMO (Multiple Input Multiple Output) et un mode de fonctionnement MISO (Multiple Input Single Output).

16. Appareil récepteur comportant :
- un réseau d'antennes réceptrices (EAA) qui comporte plusieurs noeuds récepteurs (EK) et
- une unité réceptrice (EE) pour la reconstruction d'un message émis,
chaque noeud récepteur (EK) du réseau d'antennes réceptrices (EAA) vérifiant, à l'aide d'une information de contrôle envoyée par les noeuds émetteurs (SK) du réseau d'antennes émettrices (SAA) aux noeuds récepteurs (EK) du réseau d'antennes réceptrices (EAA), un message reçu des noeuds émetteurs (SK) d'un réseau d'antennes émettrices (SAA) comme étant un message provenant d'une unité émettrice (SE) autorisée reliée au réseau d'antennes émettrices (SAA), le noeud récepteur respectif (EK) retransmettant à l'unité réceptrice (EE), pour la reconstruction du message émis, le message vérifié par lui-même comme provenant d'une unité émettrice autorisée (SE).

17. Programme informatique comportant des ordres de programme pour exécuter le procédé selon les revendications 1 à 11.

18. Support de données stockant le programme informatique selon la revendication 17.
